# EUROPÄISCHE PATENTANMELDUNG

(11) **EP 0 555 684 A1**
(43) Veröffentlichungstag der Anmeldung: **18.08.1993**
(21) Anmeldenummer: 93101107.6
(22) Anmeldetag: 26.01.1993
(51) Int. Cl.: F16L 47/02, B29C 65/34, B29C 65/68, B29C 61/08, B29C 61/06

(54) **Schweissmuffe und Verfahren zu deren Herstellung**

(30) Priorität: 08.02.1992 DE 4203626
(71) Anmelder: Georg Fischer Rohrleitungssysteme AG, CH-8201 Schaffhausen (CH)
(72) Erfinder: Keller, Friedhelm, W-7710 Donaueschingen (DE); Petry, Dirk, CH-8245 Feuerthalen (CH); Hilger, Helmut, CH-8222 Beringen (CH)

(57) **Zusammenfassung**

Die Schweissmuffe weist einen Muffenkörper (1) aus einem thermoplastischen Material auf, an dessen Innenfläche (2) eine Widerstandsdrahtwicklung (3) angeordnet ist. Am Aussenumfang (5) des Muffenkörpers (1) ist durch Aufpressen ein Verstärkungsring (6) angeordnet, welcher durch das Aufweiten Umfangs-Spannungen aufweist. Diese Spannungen wirken radial auf den Muffenkörper (1) und erhöhen den für eine gute Schweissverbindung erforderlichen Schweissdruck.

## Beschreibung

Die Erfindung betrifft eine Schweissmuffe, wie sie im Oberbegriff von Anspruch 1 beschrieben ist, sowie ein Verfahren zur Herstellung der Schweissmuffe.

Die handelsüblichen Rohre weisen teilweise weite Toleranzen und grosse Ovalitäten auf. Dies hat zur Folge das der Innendurchmesser der Muffe sehr gross - auch im Hinblick auf eine möglichst leichte Montierbarkeit - ausgeführt werden muss. Zusätzlich treten bei grossen Durchmessern der Elektroschweissmuffen entsprechend grosse Wärmedehnungen auf, die zu einem Druckabbau in der Schweisszone führen. Um dies zu verbessern, wurden Schweissmuffen mit am Aussenumfang angeordneten Armierungen geschaffen.

Eine dem Oberbegriff entsprechende Schweissmuffe ist durch die EP-A1 0222287 bekanntgeworden, wobei bei dieser Schweissmuffe eine Materialeinsparung beim Muffenkörper durch eine Armierung aus einem Werkstoff mit einem gegenüber dem Muffenkörper aus einem Polyolefin geringeren Wärmeausdehnungskoeffizienten erreicht werden soll. Durch die geringere Ausdehnung der vorzugsweise aus Metall bestehenden Armierung beim Schweissprozess soll damit der für eine gute Schweissung erforderliche Schweissdruck entstehen.

Nachteilig hierbei ist, dass bei unterschiedlichen Umgebungstemperarturen beim Schweissen sich die Wärmeausdehnungskoeffizienten zwischen Muffenkörper und Armierung sich unterschiedlich verändern, was zu unterschiedlichen Vorspannungen führt. Bei z.B. - 10°C ergibt sich ein anderer Schweissdruck als z.B. bei + 45°C, sodass keine gleichbleibende Funktionsfähigkeit gewährleistet ist.

Ausserdem ist nachteilig, dass die aus Metall bestehende und als Drahtwicklung oder rohrförmiger Körper ausgebildete Armierung gegen Korrosion nicht beständig ist, so dass eine auch gegen den Mediumsdruck wirkende dauerhafte Armierung der Schweissmuffe nicht gegeben ist.

Ausgehend von diesem Stand der Technik ist es Aufgabe der vorliegenden Erfindung, eine Schweissmuffe der eingangs genannten Art vorzuschlagen, bei welcher bei geringem Materialeinsatz auch bei unterschiedlichen Umgebungstemperaturen beim Schweissen immer eine gleichbleibende Funktionsfähigkeit gegeben ist. Die Schweissmuffe soll auch für grössere Rohrdurchmesser z.B. über 160 mm verwendbar, nicht korrosionsanfällig und durch ein einfaches automatisches Verfahren herstellbar sein.

Die Aufgabe wird erfindungsgemäss durch die kennzeichnenden Merkmale des Einrichtungsanspruches 1 und des Verfahrensanspruches 4 gelöst.

Weitere vorteilhafte Ausgestaltungen der Erfindung sind in den abhängigen Ansprüchen gekennzeichnet.

Durch die kraftschlüssige Anordnung eines Verstärkungsringes aus einem thermoplastischen Material am Aussenumfang des Muffenkörpers, entsteht durch die vorhandenen Spannungen beim Schweissen ein nach innen gerichteter Druck, welcher auf das aufgeschmolzene Material wirkt und so den für eine gute Schweissverbindung erforderlichen Schweissdruck erzeugt. Da der Wärmeausdehnungskoeffizient beim Verstärkungsring dem des Muffenkörpers weitgehendst entspricht, sind bei allen Umgebungstemperaturen gleiche Schweissdruckverhältnisse gegeben.

Vorzugsweise besteht der Muffenkörper und der Verstärkungsring aus dem gleichen thermoplastischen Material.

Wird der Verstärkungsring vor dem Aufpressen zusätzlich erwärmt und danach rasch abgekühlt, werden zusätzliche Schrumpfspannungen eingefroren, welche bis zum Verschweissen mit den Rohrteilen erhalten bleiben und dann ganz zur Erzeugung eines Schweissdruckes zusätzlich zur Verfügung stehen.

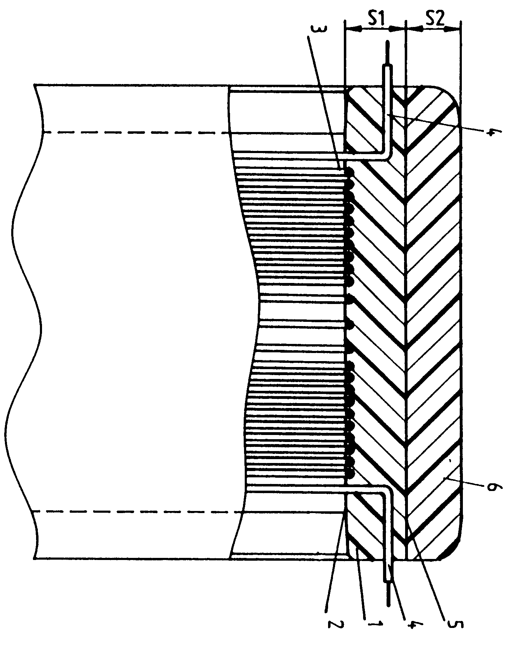

Die Erfindung ist in der beiliegenden Zeichnung beispielsweise dargestellt und nachfolgend beschrieben. Die einzige Figur zeigt einen Teil-Längsschnitt durch eine Schweissmuffe.

Die Figur zeigt eine Schweissmuffe zum festen verbinden rohrförmiger Teile bzw. Rohre mit einem aus einem thermoplastischen schweissbaren Material bestehenden Muffenkörper 1, an dessen Innenfläche 2 in bekannter Art und Weise eine Widerstandsdrahtwicklung 3 angeordnet ist und welche z.B. Anschlussdrähte 4 oder Steckanschlüsse zum Ausschliessen an eine Stromquelle aufweist. Am Aussenumfang 5 des Muffenkörpers 1 ist ein Verstärkungsring 6 angeordnet, welcher durch Aufschrumpfen bzw. Aufpressen kraftschlüssig mit dem Muffenkörper 1 verbunden ist.

Der Verstärkungsring 6 besteht ebenfalls aus einem thermoplastischen Material wobei vorzugsweise der Muffenkörper 1 und der Verstärkungsring 6 aus dem gleichen Material - vorzugsweise aus einem Polyolefin wie z.B. Polyethylen bestehen.

Zum Aufbringen des Verstärkungsringes 6 auf den bereits mit der Widerstandsdrahtwicklung 3 versehenen Muffenkörper 1 wird der Verstärkungsring 6 auf den Muffenkörper aufgepresst.

Eventuell ist es notwendig bzw. von Vorteil, den Verstärkungsring 6 je nach Material und Durchmesser auf eine Temperatur oberhalb der des Muffenkörpers zu erwärmen.

Hierbei ist der Aussendurchmesser D des Muffenkörpers 1 etwas grösser als der Innendurchmesser des gegebenenfalls erwärmten Verstärkungringes 6, wobei letzterer um das Aufweitmass aufgeweitet wird.

Beim Aufweiten werden in den Verstärkungsring 6 in Umfangsrichtung verlaufende Spannungen eingebracht, welche als radiale Druckkraft beim Schweissen den Schweissdruck erhöhen. Durch die gewählte Erwärmungstemperatur des Verstärkungsringes 6 kann zusätzlich die Massänderung des Verstärkungsringes 6 beim Abkühlen zum Spannungsaufbau genutzt werden, wobei ein kombinierter Press-Schrumpfsitz entsteht.

Durch Anschliessendes rasches Abkühlen werden die durch das Aufweiten in den Verstärkungsring 6 eingebrachten Spannungen in Umfangsrichtung eingefroren.

Beim Schweissprozess werden durch die Erwärmung die eingefrorenen Spannungen frei und wirken als radiale Druckkräfte auf den Muffenkörper und das aufgeschmolzene Material.

Durch das aufgeschmolzene Material in der Schweisszone sinkt zudem die Steifigkeit des Muffenkörpers 1, wodurch ebenfalls die radialen Druckkräfte erhöht werden.

Dadurch wird der Schweissdruck erhöht und eine feste Schweissverbindung auch bei grösseren Rohrtoleranzen gewährleistet.

Durch die Wahl des Aufweitmasses, der gewählten Wandstärken des Verstärkungsringes und eventuell dessen Aufwärmtemperatur können auch die gewünschten Spannungen bzw. der erforderliche Schweissdruck erreicht werden, wodurch eine optimale Auslegungen der Schweissmuffe erreichbar ist.

Die Wandstärke S2 des Verstärkungsringes 6 sollte vorteilhafterweise kleiner oder etwas grösser als die Wandstärke S1 des Muffenkörpers 1 sein, wobei für eine möglichst grosse Materialeinsparung geringe Wandstärken von Vorteil sind.

## Patentansprüche

1. Schweissmuffe mit einem Muffenkörper aus einem thermoplastischen schweissbaren Material mit einer an der Innenfläche des Muffenkörpers angeordneten Widerstandsdrahtwicklung und mit einer am Aussenumfang des Muffenkörpers angeordneten Armierung, dadurch gekennzeichnet, dass die Armierung ein Verstärkungsring (6) aus einem thermoplastischen Material ist und mit dem Aussenumfang (5) des Muffenkörpers (1) kraftschlüssig verbunden ist.

2. Schweissmuffe nach Anspruch 1, dadurch gekennzeichnet, dass der Verstärkungsring (6) mittels eines Press-Sitzes mit dem Aussenumfang (5) des Muffenkörpers (1) verbunden ist.

3. Schweissmuffe nach Anspruch 1 oder 2 , dadurch gekennzeichnet, dass der Verstärkungsring (6) aus dem gleichen thermoplastischen Material - vorzugsweise einem Polyolefin - besteht wie der Muffenkörper (1).

4. Schweissmuffe nach einem der Ansprüche 1 bis 3, dadurch gekennzeichnet, dass der Verstärkungring (6) eine eingefrorene latente Spannung in Umfangsrichtung aufweist.

5. Verfahren zur Herstellung einer Schweissmuffe nach einem der Ansprüche 1 bis 4, dadurch gekennzeichnet, dass der Verstärkungsring mit einem gegenüber dem Aussendurchmesser des Muffenkörpers geringeren Innendurchmesser hergestellt wird und dann auf den Muffenkörper bei gleichzeitiger Verstreckung aufgeschoben bzw. aufgepresst wird, wobei die durch die Aufweitung eingebrachten Umfangs-Spannungen radial auf den Muffenkörper wirken.

6. Verfahren nach Anspruch 5, dadurch gekennzeichnet, dass der Verstärkungsring vor dem Aufpressen auf den Muffenkörper erwärmt und danach rasch abgekühlt wird, sodass die eingebrachten Schrumpf-Spannungen eingefroren werden.

7. Verfahren nach einem der Ansprüche 5 oder 6, dadurch gekennzeichnet, dass der Verstärkungsring (6) auf den bereits mit der Widerstandsdrahtwicklung versehenen Muffenkörper (1) aufgepresst bzw. aufgeschrumpft wird.
